# EUROPÄISCHE PATENTSCHRIFT

(11) **EP 4 237 707 B1**
(45) Veröffentlichungstag und Bekanntmachung des Hinweises auf die Patenterteilung: **11.12.2024**
(21) Anmeldenummer: 21820118.4
(22) Anmeldetag: 13.10.2021
(51) Int. Cl.: G01M 15/12, F16H 57/02, G01M 13/028, F16H 57/01, F16H 57/04

(54) **VERFAHREN ZUR ÜBERWACHUNG EINES GETRIEBEMOTORS UND SYSTEM**
METHOD FOR MONITORING A GEARED MOTOR, AND SYSTEM
PROCÉDÉ POUR SURVEILLER UN MOTORÉDUCTEUR ET SYSTÈME

(30) Priorität: 27.10.2020 CN 202011163072; 30.11.2020 DE 102020007292
(43) Veröffentlichungstag der Anmeldung: 06.09.2023
(73) Patentinhaber: SEW-EURODRIVE GmbH & Co. KG, 76646 Bruchsal (DE)
(72) Erfinder: QIONGHUA,Gao, Tianjin (CN)
(86) Internationale Anmeldenummer: PCT/EP2021/025401
(87) Internationale Veröffentlichungsnummer: WO 2022/089776

(56) Entgegenhaltungen:
- KR-A- 20180 077 854
- KR-B1- 102 074 161
- US-B1- 10 608 564
- US-B1- 6 425 293

## Beschreibung

Die Erfindung betrifft ein Verfahren zur Überwachung eines Getriebemotors und ein System.

Es ist allgemein bekannt, dass die Drehzahl an der Rotorwelle eines Elektromotors zu erfassen.

Aus der US 6 434 512 B1 ist ein modulares Datensammelsystem bekannt.

Aus der EP 1 217 261 A2 ist eine Optimierung der Zeitintervalle für Ölwechsel bei einem Getriebe bekannt.

Aus der DE 10 2011 121 272 A1 ist ein Verfahren zur temperaturabhängigen Steuerung eines Elektromotors bekannt.

Aus der DE 10 2008 013 059 A1 ist ein System mit Getriebe bekannt.

**Aus der** US 6 425 293 B1 **ist als nächstliegender Stand der Technik ein Sensorstecker bekannt.**

**Aus der** KR 102 074 161 B1 **ist ein Elektrogerät mit Buetooth-Verbindung bekannt.**

**Aus der** US 10 608 564 B1 **ist ein Universal-Monitor und Fehlererkennungssystem bekannt.**

Der Erfindung liegt daher die Aufgabe zugrunde, einen Antrieb flexibel anpassbar auszuführen, wobei eine hohe Sicherheit gewährleistet sein soll.

Erfindungsgemäß wird die Aufgabe bei dem Verfahren nach den in Anspruch 1 und bei dem System nach Anspruch 6 angegebenen Merkmalen gelöst.

Wichtige Merkmale bei dem Verfahren zur Überwachung eines Getriebemotors sind, dass der Getriebemotor ein mit Öl zumindest teilweise befülltes Getriebe aufweist,
wobei ein Maß für den Ölpegel, insbesondere ein Maß für die Füllstandshöhe des Öls, erfasst wird und ein Maß für Vibration an zumindest einer Stelle des Getriebes erfasst wird,
wobei eine erste Größe gebildet wird durch Verknüpfung des Maßes für den Ölpegel und des Maßes für Vibration
der Wert der ersten Größe überwacht wird auf das Überschreiten eines zulässigen Maßes an Abweichung von einem Sollwert oder auf das Überschreiten eines Schwellwertes.

Von Vorteil ist dabei, dass die verknüpften Größen ihre Signale verändern, wenn der Ölpegel absinkt.

Bei einer vorteilhaften Ausgestaltung wird bei Überschreiten eine Warninformation angezeigt und/oder weitergemeldet und/oder eine Notabschaltung des von einem Wechselrichter gespeisten, das Getriebe antreibenden Elektromotors bewirkt oder das Aktivieren eines sicheren Zustandes des von einem Wechselrichter gespeisten, das Getriebe antreibenden Elektromotors. Von Vorteil ist dabei, dass eine erhöhte Sicherheit erreichbar ist.

**Erfindungsgemäß** weist die Verknüpfung eine Division auf,
wobei die erste Größe als Quotient aus dem Maß für Vibration und dem Maß für Ölpegel gebildet wird. Von Vorteil ist dabei, dass eine einfache mathematische Operation zur Erhöhung der Sensitivität ausreicht.

**Erfindungsgemäß alternativ** weist die Verknüpfung eine Division auf,
wobei die erste Größe als Quotient aus einem aus dem Maß für Vibration und einem Maß für Temperatur des Getriebes gebildeten Produkt und dem Maß für Ölpegel gebildet wird. Von Vorteil ist dabei, dass durch die einfachen mathematischen Operationen eine hohe Sensitivität erreichbar ist und somit eine Überwachung effizient ausführbar ist.

Bei einer vorteilhaften Ausgestaltung ist das Maß für Vibration ein Mittelwert des Fouriertransformierten zeitlichen Verlaufs des Maßes für Vibration, insbesondere in einem Frequenzband. Von Vorteil ist dabei, dass eine von einem Lager erzeugte Frequenz des Frequenzbandes einen großen Beitrag zum Maß bewirkt, wenn das Lager eine verschlechterte Schmierung aufweist.

Wichtige Merkmale der Erfindung bei dem System zur Durchführung eines vorgenannten Verfahrens sind, dass das System ein von einem wechselrichtergespeisten Elektromotor angetriebenes Getriebe aufweist und eine modular ausgebildete Auswerteeinheit aufweist,
wobei die Auswerteeinheit Auswertemodule, ein Zentralmodul und ein Versorgungsmodul aufweist.

Von Vorteil ist dabei, dass ein modularer Aufbau der Auswerteeinheit ermöglicht, weitere Auswerteeinheiten hinzuzufügen und somit weitere Sensoren über diese Auswerteeinheiten hinzuzufügen, so dass das Zentralmodul verbesserte Auswertungen auszuführen in der Lage ist. Die Anzahl der Auswerteeinheiten und somit auch Sensoren, sind an die jeweilige Antriebsaufgabe anpassbar. Somit sind Kosten und Aufwand flexibel anpassbar. Beispielsweise ist noch ein Sensor zur Erfassung des an der abtreibenden Welle abgegebenen Drehmoments und/oder der an der abtreibenden Welle abgegebenen Drehzahl erfassbar und dem Zentralmodul übergebbar. Das Zentralmodul ist nicht nur mit einem Anzeigemittel zur Anzeige von Warninformation verbunden, sondern auch mit einer Steuerung, die den Elektromotor speisenden Wechselrichter ansteuert. Somit ist aber auch die Sicherheit erhöht, da in einfacher Weise ein Sensor hinzufügbar ist und somit vom Zentralmodul eine verbesserte Überwachung des Getriebes, insbesondere also ein verbessertes Condition Monitoring, ausführbar ist.

Bei einer vorteilhaften Ausgestaltung sind die Auswertemodule, das Zentralmodul und das Versorgungsmodul aneinandergereiht angeordnet. Von Vorteil ist dabei, dass die Module in einer einzigen Reihe hintereinander anordenbar sind und somit ein übersichtlicher Aufbau der Auswerteeinheit ausführbar ist. Außerdem ist ein weiteres Auswertemodul einfach am Ende hinzufügbar, ohne die restliche Auswerteeinheit hardwaremäßig ändern zu müssen.

Bei einer vorteilhaften Ausgestaltung sind die Auswertemodule und das Zentralmodul elektrisch parallel aus dem Versorgungsmodul versorgt. Von Vorteil ist dabei, dass eine Gleichspannungsversorgung der Auswertemodule und des Zentralmoduls von einem von einem Wechselspannungsversorgungsnetz gespeisten Versorgungsmodul ausführbar ist. Dabei weist das Versorgungsmodul einen Gleichrichter auf und insbesondere einen Glättungskondensator. Vorzugsweise wird die Gleichspannungsversorgung durch die Auswertemodule durchgeschleift und die in Reihe einander berührend hintereinander angereihten Auswertemodule elektrischen Steckverbindungen verbunden

Bei einer vorteilhaften Ausgestaltung ist ein jeweiliger am Getriebe angeordneter Sensor mit einem ihm eineindeutig zugeordneten Auswertemodul elektrisch verbunden. Von Vorteil ist dabei, dass die Sensorsignale jeweils individuell aufbereitbar sind. Insbesondere ist eine Tiefpassfilterung des Sensorsignals, eine Verstärkung und/oder Offset-spannung anwendbar oder hinzufügbar. Außerdem ist ein analoges Signal in einen digitalen Datenstrom wandelbar, der dem Zentralmodul zugeführt wird.

Bei einer vorteilhaften Ausgestaltung weist jedes Auswertemodul ein eigenes Gehäuse auf. Von Vorteil ist dabei, dass die Signalverarbeitung innerhalb des jeweiligen Moduls ungestört von Störsignalen der anderen Module ausführbar ist.

Bei einer vorteilhaften Ausgestaltung ist jedes Auswertemodul mittels eines drahtlosen oder drahtgebundenen Datenübertragungskanals mit dem Zentralmodul verbunden. Von Vorteil ist dabei, dass vom Sensor erfassten und aufbereiteten Daten an das Zentralmodul übertragbar sind. Somit sind die Signale verschiedener Sensoren miteinander verknüpfbar und das Ergebnis der Verknüpfung auf ein unzulässig hohes Maß an Abweichung von einem Sollwert oder Sollwertebereich ausführbar, insbesondere als Condition Monitoring.

Bei einer vorteilhaften Ausgestaltung weist das Zentralmodul ein Mittel zur Verknüpfung von Sensorsignalen auf, dessen Ergebnis einem Mittel zur Überwachung zugeführt wird, das mit einem Mittel zur Anzeige einer Warninformation und/oder mit einem Mittel zur Abschaltung des Elektromotors verbunden ist. Von Vorteil ist dabei, dass eine verbesserte Überwachung erreichbar ist. Denn ein bloßes Überwachen der Werte einer einzelnen Größe auf Überschreiten eines Schwellwertes kann zu Fehlern führen, da Schwankungen durch ihr Auftreten insbesondere im Bereich des Schwellwertes die Überwachung verfälschen können. Erfindungsgemäß werden aber mehrere Größen verknüpft und somit eine sensitivere Kombinationsgröße gebildet.

Bei einer vorteilhaften Ausgestaltung ist ein erster Sensor zur Erfassung des Ölpegels geeignet ausgeführt, insbesondere zur Erfassung der Füllstandhöhe des im Getriebe vorhandenen Öls. Von Vorteil ist dabei, dass die Füllstandshöhe überwacht wird und mit weiteren Größen verknüpfbar ist. Somit ist eine verknüpfte Kombinationsgröße bildbar, welcher die Signale eines weiteren Sensors zuführbar sind, die bei sinkendem Ölstand ebenfalls veränderte Signale erzeugt. Beispielsweise nehmen die in einem Frequenzband gemittelten Körperschallamplituden zu.

Bei einer vorteilhaften Ausgestaltung ist ein zweiter Sensor zur Erfassung der Vibration des Getriebes geeignet ausgeführt. Von Vorteil ist dabei, dass die Körperschallamplituden des Getriebes, insbesondere in der Nähe eines Lagers des Getriebes, bestimmbar sind und mit Sensorsignalen weiterer Sensoren verknüpfbar ist.

Bei einer vorteilhaften Ausgestaltung ist ein dritter Sensor zur Erfassung der Temperatur des Getriebes geeignet ausgeführt,
insbesondere wobei der dritte Sensor ein Infrarotsensor ist und/oder dass der dritte Sensor innerhalb eines Gehäuseteils des Getriebes angeordnet ist. Von Vorteil ist dabei, dass die Signale eines dritten Sensors mit den beiden anderen verknüpfbar sind und somit unterschiedliche physikalische Größen, die bei Absinken des Ölstandes ihre Signale ändern, bestimmbar sind.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

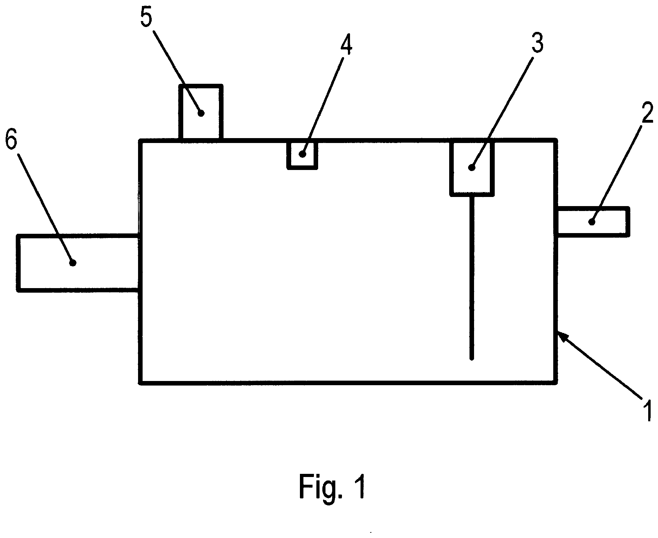

In der Figur 1 ist ein erfindungsgemäßes Getriebesystem schematisch skizziert.

Das Getriebe weist ein Gehäuseteil 1 auf, in welchem Lager aufgenommen sind zur Lagerung von Wellen, mit denen Verzahnungsteile drehfest verbunden sind.

Die eintreibende Welle 2, insbesondere antreibende, insbesondere also eintreibende, Welle, ist drehfest oder über eine Kupplung mit der Rotorwelle eines Elektromotors verbunden.

Die abtreibende Welle 6 ist mit einer anzutreibenden Last verbindbar.

Am oder im Gehäuseteil 1 sind Sensoren angeordnet, insbesondere ein Ölpegelsensor 3 zur Erfassung des vom Gehäuseteil 1 umgebenen Ölpegels, ein Temperatursensor 4 zur Erfassung der Temperatur innerhalb des Gehäuseteils und ein Vibrationssensor 5, insbesondere Körperschallsensor, zur Erfassung der mechanischen, insbesondere akustischen Schwingungen, des Gehäuseteils 1.

Die Signale der Sensoren werden einer in der Figur 1 nicht dargestellten modular aufgebauten Auswerteeinheit zugeführt.

Die Auswerteeinheit weist Auswertemodule, ein Zentralmodul und ein Versorgungsmodul auf, die aneinandergereiht angeordnet sind. Dabei sind die Auswertemodule und das Zentralmodul elektrisch parallel aus dem Versorgungsmodul versorgt.

Einem ersten der Auswertemodule wird das Sensorsignal des Ölpegelsensors 3 zugeführt, einem zweiten der Auswertemodule wird das Sensorsignal des Temperatursensors 4 zugeführt und einem dritten der Auswertemodule wird das Sensorsignal des Vibrationssensors 5 zugeführt.

Das Zentralmodul ist mittels eines Datenübertragungskanals mit den Auswertemodulen verbunden.

Im Zentralmodul werden die mittels der Sensoren und der Auswertemodule erfassten und bestimmten Messwerte ausgewertet, wobei ein Condition-Monitoring ausgeführt wird.

Dabei erfolgt im Zentralmodul eine derartige Überwachung der Messwerte, dass bei Überschreiten eines zulässigen Maßes an Abweichung von einem vorgegebenen Bereich ein Warnsignal und/oder ein Abschaltsignal herausgegeben wird.

Dabei wird vom Abschaltsignal ein Abschalten des Motors bewirkt, insbesondere über einen den Motor speisenden Wechselrichter, oder ein Aktivieren eines sicheren Zustandes des Elektromotors. Dies muss nicht unbedingt der Stillstand der Rotorwelle sein sondern kann auch eine gleichmäßige vorzugsweise gleichmäßige Drehung der Rotorwelle des Motors sein.

Im Zentralmodul werden also die von den Auswertemodulen bestimmten und Messwerte miteinander verknüpft und davon abhängig eine Überwachung ausgeführt.

Beispielsweise ist eine erste Größe bildbar, die den Quotienten aus einem Produkt und aus dem erfassten Pegelwert des Ölpegels aufweist, wobei das Produkt aus der erfassten Temperatur und einem aus den mittels des Vibrationssensors erfassten Vibrationswerten bestimmten Wert gebildet wird.

Als aus den mittels des Vibrationssensors erfassten Vibrationswerten bestimmter Wert wird beispielhaft die Amplitude einer herausgefilterten Frequenz oder die Durchschnittsamplitude eines Frequenzbandes verwendet. Vorzugsweise wird das Signal des Vibrationssensors 5 einer FFT zugeführt und aus dem so bestimmten Fourierspektrum für ein Frequenzband ein Maß für die Durchschnittamplitude und/oder das Integral über die Amplituden in Abhängigkeit von der Frequenz gebildet.

Wenn also beispielweise der Ölpegel abfällt und somit die Schmierung der Lager und/oder der miteinander im Eingriff befindlichen Verzahnungsteile verschlechtert wird, steigt der aus den mittels des Vibrationssensors erfassten Vibrationswerten bestimmte Wert und auch die Reibung der im Eingriff sich befindenden Werte.

Durch die gebildete Verknüpfung, insbesondere Quotienten- und Produktbildung, reagiert die erste Größe extrem stark. Denn ein geringes Absinken des Ölpegels kann zu einer geringen Vibrationserhöhung und Temperaturerhöhung führen. Durch die Multiplikation und Division ergibt sich aber eine erhebliche Änderung des Wertes der ersten Größe. Auf diese Weise ist also eine hohe Sensitivität gegenüber einer Änderung erreicht.

In Weiterbildung sind auch mathematisch qualitativ ähnlich sich verhaltende Verknüpfungen verwendbar.

Weiter zusätzlich ist mittels eines Sensors zur Erfassung des Motorstroms des Elektromotors der Motorstrom erfassbar und die Signale dieses Sensors einem weiteren Auswertemodul zuleitbar. Von dort werden daraus bestimmte Werte dem Zentralmodul zugeleitet, welche diese so bestimmten aus dem erfassten Motorstrom bestimmten Werte mit Werten anderer Sensoren verknüpft, so dass das Ergebnis der Verknüpfung auf ein unzulässig großes Maß an Abweichung von einem zulässigen Wert überwacht.

Bei weiteren erfindungsgemäßen Ausführungsbeispielen wird der RMS wert, insbesondere also der quadratische Mittelwert, des Fouriertransformierten, vom Vibrationssensor 5 erfassten Werteverlaufs gebildet, insbesondere in einem Frequenzband. Daraus wird der Quotient aus diesem RMS Wert und dem aus dem Signal des Ölpegelsensors 3 bestimmten Wert gebildet und auf ein unzulässig hohes Maß an Abweichung von einem Schwellwert überwacht. Somit ist eine sehr empfindlich auf Änderungen, die durch Verschlechterung der Schmierung bewirkt werden, reagierende Größe zur Überwachung zugänglich.

### Bezugszeichenliste

- 1: Gehäuseteil
- 2: eintreibende Welle, insbesondere antreibende Welle
- 3: Ölpegelsensor
- 4: Temperatursensor
- 5: Vibrationssensor, insbesondere Körperschallsensor
- 6: abtreibende Welle

## Patentansprüche

1. Verfahren zur Überwachung eines Getriebemotors,
wobei der Getriebemotor ein mit Öl zumindest teilweise befülltes Getriebe aufweist,
wobei ein Maß für den Ölpegel, insbesondere ein Maß für die Füllstandshöhe des Öls, erfasst wird und ein Maß für Vibration an zumindest einer Stelle des Getriebes erfasst wird,
wobei eine erste Größe gebildet wird durch Verknüpfung des Maßes für den Ölpegel und des Maßes für Vibration
**dadurch gekennzeichnet, dass**
der Wert der ersten Größe überwacht wird auf das Überschreiten eines zulässigen Maßes an Abweichung von einem Sollwert oder auf das Überschreiten eines Schwellwertes,
wobei
**die Verknüpfung eine Division aufweist,**
- **wobei die erste Größe als Quotient aus dem Maß für Vibration und dem Maß für Ölpegel gebildet wird**
- **oder wobei die erste Größe als Quotient aus einem aus dem Maß für Vibration und einem Maß für Temperatur des Getriebes gebildeten Produkt und dem Maß für Ölpegel gebildet wird.**

2. Verfahren nach Anspruch 1,
**dadurch gekennzeichnet, dass**
bei Überschreiten eine Warninformation angezeigt und/oder weitergemeldet wird und/oder
eine Notabschaltung des von einem Wechselrichter gespeisten, das Getriebe antreibenden Elektromotors bewirkt wird oder das Aktivieren eines sicheren Zustandes des von einem Wechselrichter gespeisten, das Getriebe antreibenden Elektromotors.

3. Verfahren nach einem der vorangegangenen Ansprüche,
**dadurch gekennzeichnet, dass**
das Maß für Vibration ein Mittelwert des Fouriertransformierten zeitlichen Verlaufs des Maßes für Vibration ist, insbesondere in einem Frequenzband.

4. System
wobei das System ein von einem wechselrichtergespeisten Elektromotor angetriebenes Getriebe aufweist und eine modular ausgebildete Auswerteeinheit aufweist,
wobei die Auswerteeinheit Auswertemodule, ein Zentralmodul und ein Versorgungsmodul aufweist,
**dadaurch gekennzeichnet, dass**
**das Zentralmodul eingerichtet und geeignet ausgeführt ist, ein Verfahren nach einem der vorangegangenen Ansprüche auszuführen.**

5. System nach Anspruch 4,
**dadurch gekennzeichnet, dass**
die Auswertemodule, das Zentralmodul und das Versorgungsmodul aneinandergereiht angeordnet sind.

6. System nach einem der Ansprüche 4 bis 5,
**dadurch gekennzeichnet, dass**
die Auswertemodule und das Zentralmodul elektrisch parallel aus dem Versorgungsmodul versorgt sind.

7. System nach einem der Ansprüche 4 bis 6,
**dadurch gekennzeichnet, dass**
ein jeweiliger am Getriebe angeordneter Sensor (3, 4, 5) mit einem ihm eineindeutig zugeordneten Auswertemodul elektrisch verbunden ist.

8. System nach einem der Ansprüche 4 bis 7,
**dadurch gekennzeichnet, dass**
jedes Auswertemodul ein eigenes Gehäuse aufweist.

9. System nach einem der Ansprüche 4 bis 8,
**dadurch gekennzeichnet, dass**
jedes Auswertemodul mittels eines drahtlosen oder drahtgebundenen Datenübertragungskanals mit dem Zentralmodul verbunden ist.

10. System nach einem der Ansprüche 4 bis 9,
**dadurch gekennzeichnet, dass**
das Zentralmodul ein Mittel zur Verknüpfung von Sensorsignalen aufweist, dessen Ergebnis einem Mittel zur Überwachung zugeführt wird, das mit einem Mittel zur Anzeige einer Warninformation und/oder mit einem Mittel zur Abschaltung des Elektromotors verbunden ist.

11. System nach einem der Ansprüche 4 bis 10,
**dadurch gekennzeichnet, dass**
ein erster Sensor (3) zur Erfassung des Ölpegels geeignet ausgeführt ist, insbesondere zur Erfassung der Füllstandhöhe des im Getriebe vorhandenen Öls.

12. System nach einem der Ansprüche 4 bis 11,
**dadurch gekennzeichnet, dass**
ein zweiter Sensor (5) zur Erfassung der Vibration des Getriebes geeignet ausgeführt ist.

13. System nach einem der Ansprüche 4 bis 12,
**dadurch gekennzeichnet, dass**
ein dritter Sensor (4) zur Erfassung der Temperatur des Getriebes geeignet ausgeführt ist, insbesondere wobei der dritte Sensor ein Infrarotsensor ist und/oder dass der dritte Sensor innerhalb eines Gehäuseteils des Getriebes angeordnet ist.

## Claims

1. Method for monitoring a gear motor,
the gear motor comprising a gearbox that is at least partly filled with oil,
a measure for the oil level, in particular a measure for the fill level of the oil, being registered, and a measure for vibration at least at one location on the gearbox being registered,
a first variable being generated by interlinking the measure for the oil level and the measure for vibration,
**characterised in that**
the value of the first variable is monitored for exceeding a permitted level of deviation from a target value or for exceeding a threshold value,
the interlinking comprising a division,
- the first variable being generated as a ratio of the measure for vibration and the measure for the oil level,
- or the first variable being generated as a ratio of a product, which is generated from the measure for vibration and a measure for the temperature of the gearbox, and the measure for the oil level.

2. Method according to claim 1,
**characterised in that**
in the event of an overshoot, warning information is displayed and/or relayed, and/or an emergency shutdown of the electric motor, which is fed by an inverter and drives the gearbox, is brought about, or the activation of a safe state of the electric motor that is fed by an inverter and drives the gearbox is brought about.

3. Method according to any of the preceding claims,
**characterised in that**
the measure for vibration is an average of the Fourier-transformed time curve of the measure for vibration, in particular in one frequency band.

4. System, the system comprising a gearbox driven by an inverter-fed electric motor, and comprising an evaluation unit configured in a modular manner,
the evaluation unit having evaluation modules, a central module and a power supply module, **characterised in that**
the central module is configured and suitable for carrying out a method according to any of the preceding claims.

5. System according to claim 4,
**characterised in that**
the evaluation modules, the central module and the power supply module are arranged side by side.

6. System according to any of claims 4 to 5,
**characterised in that**
the evaluation modules and the central module are powered from the power supply module electrically in parallel.

7. System according to any of claims 4 to 6,
**characterised in that**
each sensor (3, 4, 5) arranged on the gearbox is electrically connected to a respective evaluation module unambiguously assigned to that sensor.

8. System according to any of claims 4 to 7,
**characterised in that**
each evaluation module has its own housing.

9. System according to any of claims 4 to 8,
**characterised in that**
each evaluation module is connected to the central module by means of a wireless or wired data transmission channel.

10. System according to any of claims 4 to 9,
**characterised in that**
the central module comprises a means for interlinking sensor signals, the result of which is supplied to a monitoring means that is connected to a means for displaying warning information and/or to a means for shutting the electric motor down.

11. System according to any of claims 4 to 10,
**characterised in that**
a first sensor (3) is configured to be suitable for registering the oil level, in particular for registering the fill level of the oil present in the gearbox.

12. System according to any of claims 4 to 11,
**characterised in that**
a second sensor (5) is configured to be suitable for registering the vibration of the gearbox.

13. System according to any of claims 4 to 12,
**characterised in that**
a third sensor (4) is configured to be suitable for registering the temperature of the gearbox, the third sensor in particular being an infrared sensor, and/or **in that** the third sensor is arranged inside a housing part of the gearbox.

## Revendications

1. Procédé de surveillance d'un motoréducteur,
dans lequel le motoréducteur présente une transmission au moins partiellement remplie d'huile,
dans lequel une mesure du niveau d'huile, en particulier une mesure du niveau de remplissage d'huile, est enregistrée et une mesure de vibration est enregistrée au moins à un endroit de la transmission,
dans lequel une première grandeur est formée en combinant la mesure du niveau d'huile et la mesure de vibration, **caractérisé en ce que**
la valeur de la première grandeur est surveillée quant au dépassement supérieur d'une mesure admissible de l'écart par rapport à une valeur de consigne ou quant au dépassement supérieur d'une valeur de seuil,
dans lequel l'étape de combinaison est divisée comme suit,
- la première grandeur est formée comme un quotient de la mesure de vibration et de la mesure de niveau d'huile
- la première grandeur est formée comme un quotient d'un produit, qui est formé à partir de la mesure de vibration et d'une mesure de température de la transmission, et de la mesure de niveau d'huile.

2. Procédé selon la revendication 1,
**caractérisé en ce que**
en cas de dépassement supérieur, une information d'avertissement est affichée et/ou transmise et/ou un arrêt d'urgence du moteur électrique alimenté par un onduleur et entraînant la transmission ou l'activation d'un état de sécurité du moteur électrique alimenté par un onduleur et entraînant la transmission est provoqué(e).

3. Procédé selon l'une quelconque des revendications précédentes,
**caractérisé en ce que**
la mesure de vibration est une valeur moyenne de la courbe temporelle, avec transformée de Fourier, de la mesure de vibration, en particulier dans une bande de fréquence.

4. Système
dans lequel le système présente une transmission entraînée par un moteur électrique alimenté par un onduleur et présente une unité d'évaluation conçue de manière modulaire,
dans lequel l'unité d'évaluation présente des modules d'évaluation, un module central et un module d'alimentation,
**caractérisé en ce que**
le module central est configuré et conçu pour mettre en oeuvre un procédé selon l'une quelconque des revendications précédentes.

5. Système selon la revendication 4,
**caractérisé en ce que**
les modules d'évaluation, le module central et le module d'alimentation sont agencés de manière alignée.

6. Système selon l'une quelconque des revendications 4 à 5,
**caractérisé en ce que**
les modules d'évaluation et le module central sont alimentés électriquement en parallèle à partir du module d'alimentation.

7. Système selon l'une quelconque des revendications 4 à 6,
**caractérisé en ce que**
un capteur (3, 4, 5) respectif agencé au niveau de la transmission est relié électriquement à un module d'évaluation qui lui est associé de manière univoque.

8. Système selon l'une quelconque des revendications 4 à 7,
**caractérisé en ce que**
chaque module d'évaluation possède son propre boîtier.

9. Système selon l'une quelconque des revendications 4 à 8,
**caractérisé en ce que**
chaque module d'évaluation est relié au module central au moyen d'un canal de transmission de données sans fil ou filaire.

10. Système selon l'une quelconque des revendications 4 à 9,
**caractérisé en ce que**
le module central présente un moyen permettant de combiner des signaux de capteurs, dont le résultat est transmis à un moyen de surveillance qui est relié à un moyen permettant d'afficher une information d'avertissement et/ou à un moyen permettant d'arrêter le moteur électrique.

11. Système selon l'une quelconque des revendications 4 à 10,
**caractérisé en ce que**
un premier capteur (3) permettant d'enregistrer le niveau d'huile, en particulier permettant d'enregistrer le niveau de remplissage de l'huile présente dans la transmission, est mis en oeuvre de manière appropriée.

12. Système selon l'une quelconque des revendications 4 à 11,
**caractérisé en ce que**
un deuxième capteur (5) permettant d'enregistrer les vibrations de la transmission est mis en oeuvre de manière appropriée.

13. Système selon l'une quelconque des revendications 4 à 12,
**caractérisé en ce que**
un troisième capteur (4) permettant d'enregistrer la température de la transmission est mis en oeuvre de manière appropriée,
en particulier dans lequel le troisième capteur est un capteur infrarouge et/ou **en ce que** le troisième capteur est agencé à l'intérieur d'une partie formant carter de la transmission.
